# EUROPÄISCHE PATENTSCHRIFT

(11) **EP 3 525 718 B1**
(45) Veröffentlichungstag und Bekanntmachung des Hinweises auf die Patenterteilung: **16.09.2020**
(21) Anmeldenummer: 17778294.3
(22) Anmeldetag: 04.10.2017
(51) Int. Cl.: A61C 13/00, A61C 13/01

(54) **IN WACHS EINGEBETTETER VORGEFORMTER PROTHESENBASISROHLING**
PRE-FORMED PROSTHESIS BASE BLANK EMBEDDED IN WAX
ÉBAUCHE DE PLAQUE-BASE DE PROTHÈSE PRÉFORMÉE PRISE DANS DE LA CIRE

(30) Priorität: 14.10.2016 DE 102016119598
(43) Veröffentlichungstag der Anmeldung: 21.08.2019
(73) Patentinhaber: Kulzer GmbH, 63450 Hanau (DE)
(72) Erfinder: RUPPERT, Klaus, 63477 Maintal (DE)
(74) Vertreter: Schultheiss & Sterzel Patentanwälte PartG mbB
(86) Internationale Anmeldenummer: PCT/EP2017/075214
(87) Internationale Veröffentlichungsnummer: WO 2018/069117

(56) Entgegenhaltungen:
- EP-A1- 3 053 541
- WO-A1-2013/117540
- DE-A1-102007 013 065
- DE-A1-102011 101 678
- DE-A1-102014 105 189

## Beschreibung

Die Erfindung betrifft einen Prothesenbasisrohling zur Herstellung einer Prothesenbasis für eine Dentalprothese mit einem subtraktiven CAM-Verfahren, wobei der Prothesenbasisrohling aus einem Kunststoff besteht.

Die Erfindung betrifft auch ein Verfahren zur Herstellung einer Prothesenbasis für eine Dentalprothese und ein Set mit wenigstens einem Fräsrohling enthaltend einen Prothesenbasisrohling.

Die Erfindung betrifft somit im Endeffekt die Herstellung von partiellen Kunststoffprothesen (Teilprothesen) und totalen Kunststoffprothesen (Totalprothesen) für den zahnmedizinischen Bereich beziehungsweise von Prothesenbasen hierfür, die maschinell im CAM-Verfahren (CAM - Computer-Aided Manufacturing, Deutsch: rechner-unterstützte Fertigung) produziert werden. Bevorzugt werden die Dentalprothesen und die Prothesenbasen computergestützt mit CAD-Verfahren (CAD - Computer-Aided Design, Deutsch: rechnerunterstützte Konstruktion) konstruiert. Dabei wird zunächst eine Prothesenbasis hergestellt, die später auf dem zahnlosen oder bereichsweise zahnlosen Zahnfleisch des Kieferbogens eines Patienten aufliegt. Die fertig vorliegenden Prothesenzähne werden anschließend in die Prothesenbasis eingesetzt und dort befestigt. Die Prothesenbasis mit den aufgestellten Prothesenzähnen bildet dann die fertige Dentalprothese.

Der gängige Weg ist die analoge Erstellung von Dentalprothesen. Zur Herstellung der Prothesenbasis wird derzeit also meist ein analoges Verfahren verwendet, bei dem zunächst ein Abdruck des zahnlosen Kiefers des Patienten genommen wird. Aus diesem Abdruck wird ein Gipsmodell der Patientensituation gefertigt. Auf dem Gipsmodell wird eine Wachsbasis modelliert.

Zur Herstellung der Prothese werden die Prothesenzähne manuell und einzeln auf der zuvor hergestellten Wachsbasis aufgestellt. Diese Wachsprothese wird im nächsten Schritt in einer Küvette mit Gips eingebettet, um dann nach Aushärten des Gipses die Wachsbasis mit heißem Wasser herauszuwaschen und einen Hohlraum für den Prothesenkunststoff zu schaffen. Die Prothesenzähne verbleiben dabei im Gips. Ein angerührter Prothesenkunststoff wird in den Hohlraum injiziert oder "gestopft" und man erhält nach Aushärtung des Kunststoffs die Prothese.

Bei der Aufstellung der konfektionierten Zähne werden diese der jeweiligen Mundsituation des Patienten vom Zahntechniker und gegebenenfalls auch vom Zahnarzt angepasst und beschliffen.

Ein Verfahren zur Herstellung einer Prothesenbasis ist aus der WO 91/07141 A1 bekannt, bei dem eine Prothesenbasis auf der Basis eines Abdrucks aus einem Kunststoffblock gefräst wird. Es gibt bereits erste Verfahren, wie beispielsweise die aus der DE 10 2009 056 752 A1 oder der WO 2013 124 452 A1 bekannten Verfahren, bei denen die Teil- beziehungsweise Totalprothese digital aufgestellt und über CAD/CAM-Verfahren produziert wird. Die DE 10 2011 101 678 A1 offenbart ein Verfahren zur Bearbeitung von Prothesenzähnen, die hierzu in ein Fräswachs eingebettet werden, das die Prothesenzähne während der Bearbeitung hält. Nach der Bearbeitung werden diese aus dem Fräswachs gelöst und in eine Prothesenbasis eingesetzt. Das Verfahren ist also nicht zur Herstellung oder Bearbeitung einer Prothesenbasis vorgesehen. Aus der WO 2013 068 124 A2 ist ein Fräsblock mit vorgeformten Prothesenzähnen bekannt. Nachteilig ist hieran vor allem, dass die Stellung der Prothesenzähne fest vorgegeben ist und dadurch nicht oder nur sehr schwierig an individuelle Gegebenheiten angepasst werden kann. Nachteilig ist hieran auch, dass die Prothesenzähne aus dem gleichen Material wie die Basis bestehen und bei einer Beschädigung das ganze Gebiss getauscht werden muss und die fertig konstruierte Prothese nur mit großem Aufwand an die Bedürfnisse des Patienten (beispielsweise bezüglich der Zahnfarbe oder der Okklusion und Zahnstellung) angepasst werden kann. Ein weiterer Nachteil liegt darin, dass die Basis und der Prothesenzahn (beziehungsweise die Prothesenzahnkrone) unterschiedliche Anforderungen haben aber aus dem gleichen Material gefertigt sind. So soll der Zahn vorrangig kauen und dabei unbeschädigt bleiben. Die Basis sollte hingegen die auftretenden Kräfte über die Schleimhaut verteilen. Dies kann bei der Verwendung nur eines Materials zu Problemen führen.

Zur Herstellung von Prothesenbasen für Teil- oder Totalprothesen nach dem CAD/CAM-Verfahren kommen derzeit PMMA-Scheiben zum Einsatz. Diese "Voll"-Scheiben (auch Ronden genannt) haben den Nachteil, dass zur Herstellung einer Prothesenbasis sehr viel Material spanend abgetragen werden muss. Dieses Verfahren ist aufgrund des Materialverlusts und der langen Prozesszeiten uneffektiv. Aus der DE 20 2006 006 286 U1 ist ein solcher runder Rohling zur Herstellung einer Zahnprothese bekannt. Diese sogenannte Ronde wird in eine CAM-Fräsmaschine eingespannt und auf Basis eines CAD-Modells automatisch abgefräst. Aktuelle Verfahren fräsen aus einem solchen vollen Block (der Ronde) eine lediglich 2 mm bis 3 mm dicke Prothesenbasis. Nachteile sind einerseits eine sehr hohe Materialverschwendung, die je nach anatomischer Situation des jeweiligen Patienten problemlos über 90% betragen kann. Das führt andererseits zu einer zeitintensiven Bearbeitungszeit durch die CAM-Vorrichtung, da sehr viel Material abgetragen werden muss. Darüber hinaus ist die Abnutzung der jeweiligen Fräswerkzeuge relativ hoch.

Nachteilig ist hieran ferner, dass es relativ lange dauert, bis die Prothesenbasis hergestellt ist. Zudem nutzt sich durch die Bearbeitung des Rohlings der Fräskopf ab und muss in regelmäßigen Abständen erneuert werden. Das abgefräste Material (die Frässpäne) muss entsorgt oder recycelt werden.

Ein Verfahren zum Herstellen von zahntechnischen Prothetikteilen mittels CAD/CAM-Technologie ist aus der DE 10 2007 013 065 A1 bekannt. Darin wird auch beschrieben, dass ein Rohling für Zahnprothetikteile in Wachs oder Kunststoff eingebettet sein kann. Die DE 10 2014 105 189 A1 offenbart einen vorgeformten Prothesenbasisrohling, an dem eine Halterung befestigt sein kann, um den Prothesenbasisrohling mit der Halterung einer CAM-Fräsmaschine zu befestigen. Eine Form zur Herstellung eines solchen Prothesenbasisrohlings ist aus der DE 10 2014 114 278 A1 bekannt. Nachteilig an solchen Prothesenbasisrohlingen oder mit solchen Formen hergestellten Prothesenbasisrohlingen ist, dass die Halterungen der CAM-Fräsmaschinen auf Standard-Fräsronden ausgelegt sind und nur für diese geeignet sind. Daher müssen eigene Halterungssysteme entwickelt und angewendet werden, um derartige Prothesenbasisrohlinge mit CAM-Fräsmaschinen bearbeiten zu können. Eine derartige Halterung wird mit der WO 2013/117 540 A1 vorgeschlagen. Ferner muss Aufwand bei der korrekten Positionierung der Prothesenbasisrohlinge betrieben werden, damit die Prothesenbasisrohlinge in einer eindeutigen und der Software der CAM-Fräsmaschinen bekannten Orientierung und Lage stabil gehalten werden, so dass auch bei den mechanischen Belastungen, die beim Fräsen an dem Fräskörper auftreten, keine Positions- und Orientierungsänderungen auftreten. Ansonsten kommt es zu ungenau gefertigten und damit im Zweifelsfall nicht verwendbaren Prothesenbasen.

Die Aufgabe der Erfindung besteht also darin, die Nachteile des Stands der Technik zu überwinden. Insbesondere soll ein Prothesenbasisrohling beziehungsweise ein Fräskörper, ein Verfahren und ein Set bereitgestellt werden, mit dem eine möglichst einfache, vollständige und kostengünstige Bearbeitung des Prothesenbasisrohlings beziehungsweise eine möglichst einfache, vollständige und kostengünstige Herstellung der Prothesenbasis möglich ist, ohne dass eine aufwendige, schwer zu bedienende und fehleranfällige Halterung des Prothesenbasisrohlings notwendig wäre. Der Fräskopf beziehungsweise das Werkzeug zum Durchführen des subtraktiven CAM-Verfahrens soll dabei möglichst wenig beansprucht werden. Zudem soll die Herstellung der Prothesenbasis möglichst schnell durchgeführt werden können. Kostenintensive und schwer zu bedienende beziehungsweise einzusetzende Aufbauten wollen möglichst vermieden werden. Das Verfahren zur Herstellung der Prothesenbasis soll mit dem Prothesenbasisrohling beziehungsweise dem Fräskörper schnell und kostengünstig durchführbar sein.

Die Aufgaben der Erfindung werden gelöst durch einen Fräskörper aufweisend einen Prothesenbasisrohling zur Herstellung einer Prothesenbasis für eine Dentalprothese mit einem subtraktiven CAM-Verfahren, wobei der Prothesenbasisrohling vorgeformt ist und aus einem Kunststoff besteht, wobei der Prothesenbasisrohling in ein Wachsbett eingebettet ist, so dass das Wachsbett den Prothesenbasisrohling mechanisch hält und der Fräskörper eine umlaufende Form aus Kunststoff umfasst, die den Fräsköper entlang eines Umfangs begrenzt, wobei das Wachsbett zwischen dem Prothesenbasisrohling und der umlaufenden Form angeordnet ist.

Das Wachsbett besteht aus einem Fräswachs, das zur zerspanenden Bearbeitung mit einer Fräse geeignet ist.

Erfindungsgemäß kann vorgesehen sein, dass die äußere Form des Fräskörpers eine Ronde bildet.

Es kann vorgesehen sein, dass der Außenbereich des Fräskörpers die Geometrie einer Standardfrässcheibe aufweist.

Hierdurch kann der Fräskörper direkt als standardisiert geformte Scheibe in eine Standard-Fräshalterung beziehungsweise in eine Halterung für eine Fräsmaschine, wie eine 4-Achs-CAM-Fräsmaschine, eingespannt werden.

Mit der vorliegenden Erfindung wird vorgeschlagen, dass der Fräskörper eine umlaufende Form aus Kunststoff umfasst, die den Fräsköper entlang eines Umfangs begrenzt, wobei das Wachsbett zwischen dem Prothesenbasisrohling und der umlaufenden Form angeordnet ist, so dass sich vorzugsweise der Prothesenbasisrohling und die umlaufende Form nicht berühren.

Die das Wachsbett und den Prothesenbasisrohling umgebende Form, die mit dem Fräswachs ausgegossen wird, wird dann als Teil des Fräskörpers verwendet und muss so nicht mehr von dem Wachsbett gelöst werden. Hierdurch entfällt ein weiterer Arbeitsschritt bei der Herstellung des Fräskörpers. Zudem können an der Form außen geeignete Halterungen oder Positionierhilfen angebracht sein, die eine Befestigung und Orientierung des Fräskörpers an der CAM-Fräsmaschine vereinfachen.

Bevorzugt ist an der umlaufenden Form eine Positionierhilfe oder eine Halterung zur Befestigung des Fräskörpers an einer CAM-Vorrichtung, insbesondere einer CAM-Fräsmaschine, angeordnet. Zusätzlich oder alternativ kann vorgesehen sein, dass an der umlaufenden Form eine Markierung zur Positionierung des Fräskörpers vorgesehen ist.

Mit der Erfindung wird auch vorgeschlagen, dass die Lage und Orientierung der zu erzeugenden Prothesenbasis in dem Prothesenbasisrohling durch die äußere Form des Prothesenbasisrohlings vorgegeben ist.

Selbstverständlich bleibt ein gewisser Spielraum, um unterschiedliche Prothesenbasen aus dem Prothesenbasisrohling fertigen zu können.

Es kann erfindungsgemäß vorgesehen sein, dass der Prothesenbasisrohling genau eine Symmetrieebene oder zwei senkrecht zueinander orientierte Symmetrieebenen aufweist, wobei genau eine Symmetrieebene bevorzugt ist. Bevorzugt kann dabei vorgesehen sein, dass die eine Symmetrieebene oder eine der Symmetrieebenen der Sagittalebene der zu erzeugenden Prothesenbasis entspricht.

Mit einer Weiterentwicklung der vorliegenden Erfindung wird vorgeschlagen, dass der Zahnbogen oder Zahnbogenabschnitt in okklusaler Richtung von der Auflagefläche auf dem Zahnfleisch weg mit abnehmender Breite geformt ist.

Hierdurch wird die Form des Prothesenbasisrohlings weiter an die Form von normalen beziehungsweise üblichen Prothesenbasen angepasst, die in okklusaler Richtung ebenfalls abnehmende Querschnitte senkrecht zum Verlauf des Zahnbogens aufweisen. Hierdurch wird die Menge des bei der Herstellung abzutragenden beziehungsweise abzufräsenden Materials der Prothesenbasis weiter reduziert.

Es kann erfindungsgemäß auch vorgesehen sein, dass der Prothesenbasisrohling auf der Seite zur Auflage auf dem Zahnfleisch eine gewölbte Vertiefung als Vorformung einer Aufnahme eines zahnlosen Kiefersattels oder eines Teils eines zahnlosen Kiefersattels aufweist, wobei die Vertiefung sich entlang des Zahnbogens oder Zahnbogenabschnitts erstreckt.

Auch diese Maßnahme dient dazu, die Form des Prothesenbasisrohlings weiter an die daraus zu erzeugende Form der Prothesenbasis anzupassen, um Material des Prothesenbasisrohlings einzusparen und damit Zeit bei der Herstellung einzusparen und die Abnutzung des Fräswerkzeugs zu reduzieren.

Es wird mit der vorliegenden Erfindung auch vorgeschlagen, dass an wenigstens einer Seite des Fräskörpers, bevorzugt an einem Zylindermantel des als Ronde geformten Fräskörpers, eine Positionierhilfe oder eine Halterung zur Befestigung des Fräskörpers an einer CAM-Vorrichtung, insbesondere einer CAM-Fräsmaschine, angeordnet ist und/oder eine Markierung zur Positionierung des Fräskörpers vorgesehen ist.

Hierdurch kann sichergestellt werden, dass der Fräskörper in der richtigen Orientierung und der richtigen Position in die CAM-Vorrichtung eingespannt werden kann.

Der Fräskörper beziehungsweise ein Fräskörper-Halter sowie das entsprechende Gegenstück der CAM-Fräsmaschine beziehungsweise der CAM-Vorrichtung weisen jeweils eine Markierung auf (zum Beispiel Nut, Zapfen etc.), welche eine eindeutige Positionierung des Fräskörpers beziehungsweise des Fräskörper-Halters in der Fräsmaschine gewährleisten.

Ferner kann vorgesehen sein, dass der Prothesenbasisrohling aus Polymethylmethacrylat (PMMA), mehrfach vernetzte Acrylaten, Polyetherketon (PEK), Polyetheretherketon (PEEK), Polyamid (PA), Polycarbonat (PC) oder Polyurethan (PU) besteht.

Diese Materialien sind für die Bearbeitung des Prothesenbasisrohlings mit CAM-Verfahren besonders gut geeignet. Zudem lassen sich daraus auch ästhetisch passende Prothesenbasen fertigen.

Es kann erfindungsgemäß auch vorgesehen sein, dass in dem Material, aus dem der Prothesenbasisrohling aufgebaut ist, anorganische Füllstoffe enthalten sind. Bevorzugt ist der Prothesenbasisrohling aus einem Kunststoff aufgebaut.

Als anorganische Füllstoffe kommen Siliziumoxide, Dentalgläser, Glaskeramiken oder deren Mischungen sowie anorganische Fasern aus Glas, Carbon oder organische Fasern aus Polyethylenen mit ultrahohem Molekulargewicht (UHMW-PE) in Frage. Die Füllstoffe können in Pulverform in dem Kunststoff verteilt sein. Bevorzugt kann der Kunststoff eine Transparenz aufweisen, die der Prothesenbasis ein natürliches Aussehen gibt.

Gemäß einer bevorzugten Weiterbildung der vorliegenden Erfindung kann vorgesehen sein, dass ein Zahnbogen oder ein Zahnbogenabschnitt als Materialverdickung des Prothesenbasisrohlings vorgeformt ist.

Hierdurch wird das notwendige Material des Prothesenbasisrohlings reduziert und damit die Kosten des Fräskörpers und der Aufwand bei der nachfolgenden Bearbeitung verringert.

Dass der Zahnbogen oder Zahnbogenabschnitt vorgeformt ist, bedeutet, dass das Material für den zu erzeugenden Zahnbogen der Prothesenbasis oder den zu erzeugenden Zahnbogenabschnitt der Teil-Prothesenbasis bereits in der Materialverdickung enthalten ist. Dazu sind die Abmessungen des Zahnbogens oder des Zahnbogenabschnitts größer als eine Gruppe typischer zu fertigender Zahnbögen von Prothesenbasen einschließlich üblicher Toleranzen. Mit etwa fünf verschiedenen Größen von Prothesenbasisrohlinge, können etwa 80% der realistisch zu erwartenden Prothesenbasen abgedeckt werden.

Der Zahnbogen umfasst die Form der Prothesenbasis, aber nicht der einzusetzenden Prothesenzähne. Nach Einsetzen der Prothesenzähne kann das mit dem Prothesenbasisrohling erzeugte Gebiss also höher sein, als die Verdickung des Zahnbogens des unbearbeiteten Prothesenbasisrohlings.

Gemäß einer weiteren Ausführungsform der vorliegenden Erfindung kann vorgesehen sein, dass im Inneren des Zahnbogens oder des Zahnbogenabschnitts des Prothesenbasisrohlings und entlang des Zahnbogens oder des Zahnbogenabschnitts eine Versteifung des Materials des Prothesenbasisrohlings und/oder eine Armierung vorgesehen ist oder sind.

Hierdurch wird eine Verbesserung der mechanischen Eigenschaften der aus dem Prothesenbasisrohling erzeugten Prothesenbasis erzielt. Die mechanische Haltbarkeit einer derart erzeugten Dentalprothese ist im Vergleich zu herkömmlich mit CAD/CAM-Verfahren hergestellten Dentalprothesen verbessert.

Gemäß einer besonders bevorzugten Weiterbildung der vorliegenden Erfindung kann vorgesehen sein, dass der Zahnbogen als randseitige parabelförmige Verdickung des Materials des Prothesenbasisrohlings ausgebildet ist oder der Zahnbogenabschnitt als randseitige Verdickung des Materials in der Form eines Teilstücks einer Parabelform des Prothesenbasisrohlings ausgebildet ist.

Diese Form bietet die bestmögliche Ausgangsform zur Herstellung verschiedener Prothesenbasen. Die wesentliche Formgebung muss nämlich im Bereich dieser Zahnbögen durchgeführt werden. Gleichzeitig ist durch diesen Aufbau schon grob die Form einer Prothesenbasis vorgegeben, so dass der Materialverlust beim Abtragen weiter minimiert werden kann. Zudem können so besonders leicht bereits fertige und nicht weiter zu bearbeitende Oberflächen des Prothesenbasisrohlings bereitgestellt werden, die mit dem Wachsbett während der Bearbeitung mit der CAM-Fräsmaschine verbunden bleiben und die so den Prothesenbasisrohling bis zum Ende der Bearbeitung mit dem Wachsbett verbinden, so dass der Prothesenbasisrohling bis zum Ende der Bearbeitung von dem Wachsbett mechanisch gehalten wird.

Bei solchen Prothesenbasisrohlingen kann vorgesehen sein, dass die Verdickung eine Breite zwischen 8 mm und 30 mm aufweist und/oder die Verdickung eine Dicke beziehungsweise Höhe zwischen 5 mm und 30 mm aufweist. Die Breite und Dicke beziehungsweise Höhe der Verdickung entspricht dann der Breite und Dicke beziehungsweise der Höhe des Zahnbogens des Prothesenbasisrohlings.

Hierdurch ist genug Platz zum Einsetzen der Prothesenzähne in der Verdickung des Prothesenbasisrohlings, wenn dieser mit dem CAM-Verfahren bearbeitet ist. Gleichzeitig kann an anderen Flächen die Verbindung mit dem Wachsbett bis zum Ende der Bearbeitung erhalten bleiben.

Des Weiteren kann vorgesehen sein, dass der Prothesenbasisrohling eine Weite zwischen 40 mm und 70 mm und eine Länge zwischen 40 mm und 70 mm aufweist.

Mit diesen Abmessungen des Prothesenbasisrohlings lassen sich eine Vielzahl verschiedener und üblich geformter Prothesenbasen aus dem Prothesenbasisrohling herausarbeiten.

Ferner kann bei diesen Prothesenbasisrohlingen vorgesehen sein, dass die Verdickung im Bereich um den Scheitelpunkt der parabelförmigen Verdickung eine größere Dicke beziehungsweise Höhe aufweist als an den Schenkeln der parabelförmigen Verdickung und/oder dass die Dicke beziehungsweise Höhe der Verdickung in Richtung des Scheitelpunkts des Parabelformabschnitts zunimmt.

Hierdurch kann eine weitere Anpassung der Form des Prothesenbasisrohlings an die zu erzeugende Prothesenbasis und damit eine Materialeinsparung erreicht werden.

Des Weiteren kann vorgesehen sein, dass eine Fläche des Prothesenbasisrohlings, die zur Auflage auf dem Zahnfleisch des Patienten vorgesehen ist, durch einen Abdruck am Patienten geformt ist.

Dadurch kann eine relativ große nicht zu bearbeitende Oberfläche des Prothesenbasisrohlings geschaffen werden. Dies ist auch deshalb günstig, da zumindest diese Oberfläche bis zum Ende des Fräsverfahrens im Wachsbett eingebettet bleiben kann und so den Prothesenbasisrohling in dem Fräskörper mechanisch stabilisiert.

Die der vorliegenden Erfindung zugrundeliegenden Aufgaben werden auch gelöst durch ein Verfahren zur Herstellung einer Prothesenbasis zur Herstellung einer Totaldentalprothese oder wenigstens einer Teildentalprothese mit einem solchen Fräskörper aufweisend die folgenden Verfahrensschritte:
1) Befestigen des Fräskörpers in einer CAM-Vorrichtung zum Abtragen von Material des Prothesenbasisrohlings mit einem CAM-Verfahren und
2) Abtragen von Material des Prothesenbasisrohlings und von Wachs des Wachsbetts mit der CAM-Vorrichtung auf der Basis eines berechneten CAD-Modells.

Als CAM-Vorrichtung wird bevorzugt eine CAM-Fräsmaschine verwendet.

Aus dem erfindungsgemäßen Fräskörper mit dem Prothesenbasisrohling kann entweder eine Totalprothese für einen Kieferteil gefräst beziehungsweise geformt werden oder es können mehrere Teilprothesen aus einem Prothesenbasisrohling gefräst beziehungsweise geformt werden.

Es kann auch vorgesehen sein, dass vor dem Befestigen des Fräskörpers in der CAM-Vorrichtung der Fräskörper durch Einbetten des Prothesenbasisrohlings in ein Wachsbett hergestellt wird.

Hiermit kann gegebenenfalls ein bestimmter und ausgewählter Prothesenbasisrohling verwendet werden, um den Fräskörper herzustellen.

Mit dem erfindungsgemäßen Verfahren wird auch vorgeschlagen, dass der Fräskörper aus einer Vielzahl von Fräskörpern mit unterschiedlichen Prothesenbasisrohlingen ausgewählt wird, wobei die Auswahl rechnerisch auf der Grundlage des CAD-Modells der zu erzeugenden Prothesenbasis und den bekannten Abmessungen aller in den Fräskörpern enthaltenen Prothesenbasisrohlinge erfolgt, wobei bevorzugt über eine Ausgabeeinrichtung eines Computers die Prothesenbasisrohlinge der Auswahl vorgeschlagen werden und/oder über eine Eingabeeinrichtung ausgewählt werden können, welche die Form des CAD-Modells der zu erzeugenden Prothesenbasis vollständig aufnehmen können.

Hierdurch kann eine größere Anzahl unterschiedlicher Prothesenbasisrohlinge verschiedener Fräskörper zur Verfügung gestellt werden, wobei jeder Prothesenbasisrohling schon besser an die Geometrie der zu erzeugenden Prothesenbasis angepasst ist, als wenn nur ein Prothesenbasisrohling oder wenige Prothesenbasisrohlinge zur Auswahl stünden.

Dabei kann vorgesehen sein, dass die vorgeschlagene Reihenfolge der in der Auswahl vorgeschlagenen Fräskörper bestimmt wird durch eine zunehmende Volumendifferenz zwischen der Form der Prothesenbasisrohlinge und der Form des CAD-Modells der zu erzeugenden Prothesenbasis.

Hierdurch werden zunächst solche Fräskörper vorgeschlagen, die Prothesenbasisrohlinge enthalten, die möglichst wenig bearbeitet werden müssen. Dadurch kann der Anwender an der Reihenfolge der vorgeschlagenen Fräskörper erkennen, mit welchem Fräskörper innerhalb der kürzesten Zeit die Prothesenbasis anhand des CAD-Modells gefertigt werden kann.

Ferner kann erfindungsgemäß auch vorgesehen sein, dass der Fräskörper ausgewählt wird oder die Fräskörper ausgewählt werden aus der Menge der Fräskörper mit unterschiedlichen Prothesenbasisrohlingen, deren Prothesenbasisrohlinge äußere Abmessungen aufweisen, die die Form der zu erzeugenden Prothesenbasis, die durch das CAD-Modell berechnet ist, vollständig aufnehmen können, wobei bevorzugt die vorgeschlagene Reihenfolge, insbesondere die angezeigte oder dargestellte Reihenfolge, der ausgewählten Fräskörper bestimmt wird durch die Volumendifferenz zwischen der äußeren Form der Prothesenbasisrohlinge der jeweiligen Fräskörper und dem CAD-Modell der zu erzeugenden Prothesenbasis.

Es kann erfindungsgemäß auch vorgesehen sein, dass automatisch der Fräskörper mit dem Prothesenbasisrohling vorgeschlagen wird oder verwendet wird, der die geringste Volumendifferenz zu dem CAD-Modell der zu erzeugenden Prothesenbasis aufweist.

Durch diese Maßnahmen gelingt es, bei einer gegebenen Auswahl verschiedener Prothesenbasisrohlinge denjenigen oder diejenigen auszuwählen, der am schnellsten bearbeitet werden kann oder die am schnellsten bearbeitet werden können, beziehungsweise bei denen am wenigsten Material abgetragen werden muss, und bei denen eine besonders gute Verbindung der herzustellenden Prothesenbasis mit dem verbleibenden Wachsbett bis zum Ende der Bearbeitung möglich ist.

Es wird auch vorgeschlagen, dass bei der Berechnung des CAD-Modells der zu erzeugenden Prothesenbasis zuvor aufgenommene Daten zur Mundraumsituation des Patienten und/oder die äußere Form der Prothesenbasisrohlinge oder die äußere Form des Prothesenbasisrohlings berücksichtigt wird.

Hierdurch wird eine weitgehende Automatisierung des erfindungsgemäßen Verfahrens ermöglicht.

Des Weiteren kann vorgesehen sein, dass mit dem CAM-Verfahren in dem vorgeformten Zahnbogen des Prothesenbasisrohlings mehrere Ausnehmungen zur Aufnahme von Prothesenzähnen in der hergestellten Prothesenbasis erzeugt werden, bevorzugt gefräst werden.

Durch die Herstellung der Prothesenbasis und der Ausnehmungen in einem Schritt kann zum einen Zeit eingespart werden und zum anderen können Fehler vermieden werden, die beim erneuten beziehungsweise separaten Einspannen und Positionieren der halbfertigen Prothesenbasis beziehungsweise des bearbeiteten Fräskörpers in die selbe oder eine andere subtraktive CAM-Vorrichtung auftreten können.

Gemäß einer bevorzugten Ausführung des erfindungsgemäßen Verfahrens kann vorgesehen sein, dass der Prothesenbasisrohling aus einem Heißpolymerisat in einer Metallform mittels Stopf-/Press- oder Injektions-Technik oder aus einem Kaltpolymerisat in einer Metall-, Silikon- oder Dubliergelform mittels Gieß- oder Injektionstechnik hergestellt wird. Das Heiß- und Kaltpolymerisat besteht aus einem Pulver- und einer Monomerflüssigkeit und diese ergeben am Ende einen PMMA-Werkstoff.

Hierdurch wird auch die Herstellung des Prothesenbasisrohlings in das erfindungsgemäße Verfahren einbezogen, wodurch dieser speziell auf das zu erzielende Endergebnis (nämlich die herzustellende Prothesenbasis) mit geeigneten Rohling-Formen hergestellt werden kann und dadurch keine Lagerhaltung unterschiedlicher Prothesenbasisrohlinge notwendig ist. Zudem wird das Material erst dann verwendet, wenn der Bedarf besteht und so ein unnötiger Verbrauch des Kunststoffs vermieden wird. Des Weiteren kann die Färbung des Prothesenbasisrohlings bereits an Patienten-spezifische ästhetische Bedürfnisse angepasst werden. Zudem ist so eine kostengünstige Fertigung möglich.

Aus Gründen der Wiederverwendbarkeit wird eine Metallform, insbesondere Stahl, Aluminium oder Messing erfindungsgemäß bevorzugt. Aus Gründen der kosteneffizienten Fertigung wird eine Stopf-/Presstechnik erfindungsgemäß bevorzugt. Zur Formgebung der später beim Patienten am Zahnfleisch aufliegenden Oberfläche des zu erzeugenden Prothesenbasisrohlings kann erfindungsgemäß bevorzugt ein Abdruck des zahnlosen Kieferbereichs als Formteil verwendet werden, so dass die Auflagefläche des Prothesenbasisrohlings bereits fertig vorgeformt ist und später nicht nachbearbeitet werden muss.

Die Polymerisation erfolgt vorzugsweise in einem Heißpolymerisationsprozess bei Temperaturen über 80°C unter Druck.

Nach der Polymerisation wird der Prothesenbasisrohling aus der Rohling-Form entnommen, gegebenenfalls noch leicht nachbearbeitet und anschließend zur Wachseinbettung in einer neuen Form platziert. Diese Form kann entweder so gestaltet sein, dass nach dem Erkalten des Wachses der Fräsrohling und das Wachs der Form entnommen werden können oder nach dem Erkalten die Form integraler Bestandteil des neuen Produktes geworden ist. Die wiederverwendbare Form ist dabei vorteilhafterweise aus Metall, die integrierte Form vorteilhafterweise aus Kunststoff gefertigt.

Die Innengeometrie der Form beziehungsweise Metallform entspricht dabei der Außengeometrie einer Standardfrässcheibe (Außendurchmesser 98,5 mm, umlaufender Ring von 10 mm Höhe). Die Außengeometrie muss sehr präzise gefertigt sein, um exakt in die Halterung/Aufnahme der Fräsmaschine zu passen. Erfindungsgemäß weist die Wachsguss-Form eine oder mehrere Positionierhilfen auf, um den Fräsrohling reproduzierbar immer an der gleichen Stelle während des Wachsgussprozesses zu positionieren.

Des Weiteren kann vorgesehen sein, dass eine Fläche des Prothesenbasisrohlings, die zur Auflage auf dem Zahnfleisch des Patienten verwendet wird, durch einen Abdruck am Patienten geformt wird.

Die Aufgaben der vorliegenden Erfindung werden auch gelöst durch ein Set aufweisend wenigstens einen Fräskörper, vorzugsweise eine Mehrzahl von Fräskörpern mit unterschiedlich geformten Prothesenbasisrohlingen, und Daten zur äußeren Form des zumindest einen Prothesenbasisrohlings, bevorzugt der Lage des Prothesenbasisrohlings im Wachsbett, besonders bevorzugt aufweisend einen Datenträger auf dem die Daten gespeichert sind.

Dabei kann vorgesehen sein, dass das Set mehrere unterschiedlich geformte Prothesenbasisrohlinge aufweist und Daten zur äußeren Form aller dieser Prothesenbasisrohlinge aufweist und dass das Set zur Umsetzung eines erfindungsgemäßen Verfahrens vorgesehen ist.

Die Lage des Prothesenbasisrohlings im Wachsbett ist dann von besonderem Interesse, wenn es sich nicht um standardisierte Fräskörper handelt, bei denen die Prothesenbasisrohlinge immer in der gleichen Lage im Wachsbett eingebettet sind.

Der Erfindung liegt die überraschende Erkenntnis zugrunde, dass es mit den vorgeformten Prothesenbasisrohlingen, die in ein Wachsbett eingebettet sind, gelingt, ein schnelleres und effizienteres Verfahren zur Herstellung von Prothesenbasen zu ermöglichen, bei denen die Werkzeuge der CAM-Vorrichtung geschont werden und der Materialverlust des Materials der Prothesenbasis durch die subtraktiven CAM-Verfahren minimiert werden kann. Das Wachsbett ist wesentlich weicher als das Material der Prothesenbasis und schont daher die Fräsköpfe und ist zudem schneller heraus zu fräsen. Des Weiteren ist das Fräswachs beziehungsweise das Wachsbett wesentlich kostengünstiger in der Herstellung, in der Verarbeitung und in der Bearbeitung. Durch die geeignete Form der Prothesenbasisrohlinge bleiben diese ausreichend flexibel, um problemlos an die unterschiedlichen Mundraumsituationen und anderen Anforderungen für die zu erzeugende Prothesenbasis angepasst zu werden.

Das Wachsbett muss im Gegensatz zu einer massiven Ronde aus Kunststoff auch nicht vollständig von der herzustellenden Prothesenbasis getrennt werden, sondern kann bis zum Ende der Bearbeitung mit der Prothesenbasis verbunden bleiben. Nach der Bearbeitung kann nämlich das restliche Wachs des Wachsbetts einfach durch Erhitzen beziehungsweise Schmelzen von der fertigen Prothesenbasis gelöst werden. Es reicht also aus, wenn ausschließlich der Prothesenbasisrohling und die an die Oberfläche der zu erzeugenden Prothesenbasis angrenzenden Bereiche des Wachsbetts mit der CAM-Fräsmaschine bearbeitet werden.

Damit die Prothesenbasis noch bis zum Ende der Verarbeitung mit dem restlichen Fräskörper verbunden bleibt, können beim CAM-Fräsen gezielt Stege zurückbleiben beziehungsweise belassen werden, die die Prothesenbasis mit dem Wachsbett verbinden, so dass das Wachsbett die Prothesenbasis bis zum Ende mechanisch im Wachsbett hält. Nach dem Trennen der Prothesenbasis von dem Wachsbett werden diese Stege dann abgetrennt und die Prothesenbasis geglättet. Mit dieser Maßnahme kann die Prothesenbasis also auch dann aus dem Prothesenbasisrohling gefertigt werden, wenn keine Oberfläche des Prothesenbasisrohlings unbearbeitet bleiben kann und also keine oder nicht ausreichend viel nicht zu bearbeitende Oberfläche des Prothesenbasisrohlings für eine Verbindung mit dem Wachsbett bleibt.

Die Prothesenbasisrohlinge, das Verfahren und das Set sind zur Bearbeitung mit CAD/CAM-Verfahren vorgesehen und hierfür besonders geeignet.

Erfindungsgemäß wird die Aufgabe unter anderem dadurch gelöst, dass der Prothesenbasisrohling des Fräskörpers schon eine an die Endgeometrie der Prothesenbasis angepasste Form aufweist. Um den Fräsaufwand möglichst gering zu halten, wird der enthaltene Prothesenbasisrohling mit einem nur geringen geometrischen Übermaß, aber entsprechend den unterschiedlichen Kiefersituationen verschiedener Patienten in verschiedenen Höhen, Weiten und Längen angeboten.

Der dieser Erfindung zu Grunde liegende Lösungsansatz geht bevorzugt von diversen Fräskörpern mit unterschiedlich vorgeformten Prothesenbasisrohlingen aus, die die oben genannten Nachteile dadurch eliminieren, dass es sich nicht um Vollkörper, sondern um vorgeformte Rohlinge handelt, die in ein Wachsbett eingebettet sind, wobei die Fräskörper bezüglich ihrer äußeren Abmessungen gleich sind und bevorzugt Standard-Fräsronden entsprechen.

Im Folgenden werden Ausführungsbeispiele der Erfindung anhand von vier schematisch dargestellten Figuren erläutert, ohne jedoch dabei die Erfindung zu beschränken. Dabei zeigt:
Figur 1: eine schematische perspektivische Ansicht eines Prothesenbasisrohlings mit umlaufenden Ring zur Herstellung eines erfindungsgemäßen Fräskörpers;
Figur 2: eine schematische seitliche Ansicht eines Prothesenbasisrohlings für einen erfindungsgemäßen Fräskörper;
Figur 3: eine schematische Aufsicht auf einen nicht erfindungsgemäßen Fräskörper; und
Figur 4: eine schematische Aufsicht auf einen erfindungsgemäßen Fräskörper für eine Teilprothesenbasis.

In den Figuren werden auch bei unterschiedlichen Ausführungen für gleichartige Teile die gleichen Bezugszeichen verwendet.

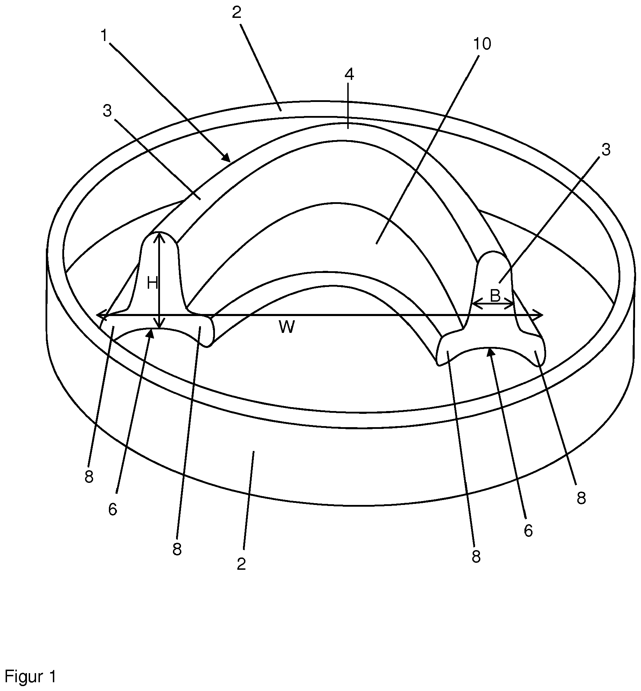

Figur 1 zeigt eine schematische perspektivische Ansicht eines Prothesenbasisrohlings 1 mit umlaufenden Ring 2 zur Herstellung eines erfindungsgemäßen Fräskörpers. Der Prothesenbasisrohling 1 besteht aus einem Kunststoff, bevorzugt aus einem Polymer. Randseitig weist der Prothesenbasisrohling 1 eine parabelförmige Verdickung auf, die einen vorgeformten Zahnbogen 3 bildet. Der Prothesenbasisrohling 1 ist symmetrisch bezogen auf eine mittlere Ebene. Diese mittlere Ebene entspricht der Sagittalebene des Patienten, bei dem die mit dem Prothesenbasisrohling 1 hergestellte Dentalprothese eingesetzt wird. In der Sagittalebene befindet sich der Scheitelpunkt 4 des parabelförmigen Prothesenbasisrohlings 1. Der Scheitelpunkt 4 der daraus erzeugten Prothesenbasis wird später beim Patienten labial also lippenseitig angeordnet sein, wenn aus dem Prothesenbasisrohling 1 eine Totaldentalprothese gefertigt wird oder eine Teilprothese gefertigt wird, die zumindest die mittleren Schneidezähne umfasst.

Auf der Seite, mit der die aus dem Prothesenbasisrohling 1 zu fertigende Prothesenbasis auf dem Zahnfleisch aufgelegt wird (in Figur 1 unten), ist eine Vertiefung 6 vorgesehen. Die Vertiefung 6 stellt eine Vorformung der Auflagevertiefung der zu erzeugenden Prothesenbasis dar, die das zahnlose Zahnfleisch des Patienten aufnehmen soll. Diese Vertiefung 6 kann bevorzugt mit Hilfe eines Abdrucks am Patienten geformt werden. Dadurch muss diese Fläche 6 dann zur Herstellung der Prothesenbasis nicht mehr bearbeitet werden. Dadurch kann diese Oberfläche 6 dann zur Verbindung mit einem Wachsbett bis zum Ende des Ausfräsens des Prothesenbasisrohlings 1 genutzt werden.

Seitlich neben dem Zahnbogen 3 sind Überstände 8 vorgesehen, aus denen die kieferseitigen Verbindungsflächen der Prothesenbasis geformt werden. Dieser Überstand ist im Bereich des Scheitelpunkts 4 oral zu einem Mittelstück 10 verbreitert, aus dem eine palatinale, also gaumenseitige, oder unterhalb der Zunge im Mundraum des Unterkiefers aufliegende Anlagefläche formbar ist.

Der Zahnbogen 3 weist eine Breite B und eine Höhe H auf, wobei sich die Breite B und die Höhe H entlang des Zahnbogens ändern kann. Bei dem in Figur 1 dargestellten Prothesenbasisrohling 1 nimmt die Höhe H des Zahnbogens 3 zum Scheitelpunkt 4 hin zu. In diesem Bereich müssen, nach dem die Prothesenbasis herausgearbeitet wurde, die Schneidezähne beziehungsweise die Prothesen der Schneidezähne eingesetzt und befestigt werden. Die Breite B des Zahnbogens 4 wird so breit gewählt, dass eine ausreichende Variation der Ausformung der zu erzeugenden Prothesenbasis möglich ist.

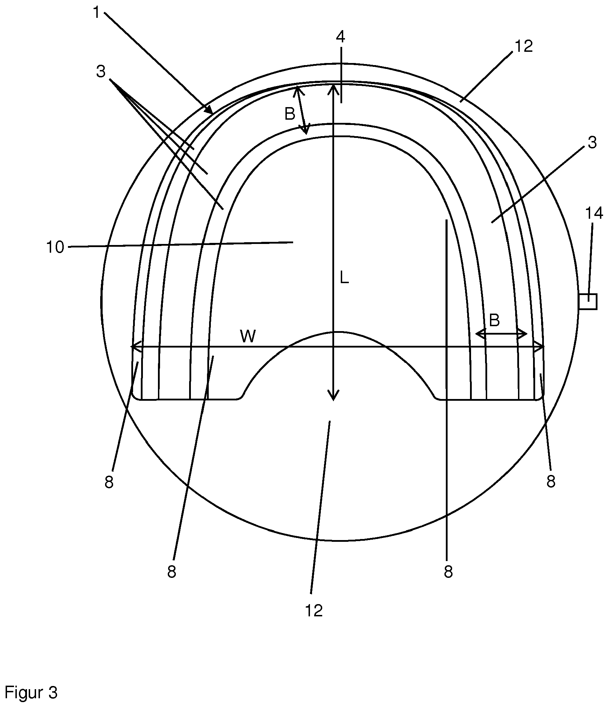

Der gesamte Prothesenbasisrohling 1 weist ferner eine Weite W und eine Länge L auf (die Länge L ist nicht in Figur 1 dargestellt, aber in Figur 3 gekennzeichnet). Die Länge L ist die maximale äußere Abmessung des Prothesenbasisrohlings in der Sagital-Ebene und zwar in einer Richtung parallel zur Okklusionsebene. Die äußere Abmessung schließt die beiden Schenkel des hufeisenförmigen Prothesenbasisrohlings ein. Die Weite W (beziehungsweise Breite W) und die Länge L werden dabei derart gewählt, dass eine Vielzahl verschiedener üblicher Prothesenbasen aus dem Prothesenbasisrohling 1 herausgefräst werden kann. Beispielsweise kann die Weite W zwischen 40 mm und 70 mm liegen und die Länge L zwischen 40 mm und 70 mm.

Zur Fertigung des Fräskörpers wird der Ring 2 mit einem flüssigen Fräswachs (in Figur 1 nicht gezeigt) ausgegossen. Dabei bettet das Wachs im Ring 2 den Prothesenbasisrohling 1 ein. Das so entstehende Wachsbett umschließt den Prothesenbasisrohling 1 zumindest bereichsweise und hält dadurch den Prothesenbasisrohling 1 in seinem Inneren mechanisch stabil in Position und Orientierung.

Der Ring 2 bleibt mit dem Wachsbett verbunden, so dass der Ring 2 zusammen mit dem Prothesenbasisrohling 1 und dem Wachsbett den Fräskörper bildet. Der Ring 2 besteht aus einem Kunststoff, wie einem Polyethylen. Der Prothesenbasisrohling 1 kann aus dem Wachsbett vorstehen. Bevorzugt stehen die oberen Teile des Zahnbogens 3 aus dem Wachsbett vor, so dass diese Bereiche direkt mit Hilfe einer Fräse bearbeitet werden können, ohne dass dort zuvor das Wachsbett entfernt werden müsste.

Der gezeigte Prothesenbasisrohling 1 ist sowohl zur Herstellung einer Teilprothesenbasis oder mehrerer Teilprothesenbasen oder einer Totalprothesenbasis für einen Oberkiefer als auch für einen Unterkiefer geeignet. Es ist aber auch möglich, stärker vorgeformte Prothesenbasisrohlinge 1 vorzusehen, bei denen zwischen Oberkiefer und Unterkiefer unterschieden wird. Zudem oder alternativ können eine Vielzahl verschiedener Prothesenbasisrohlinge 1 vorgehalten werden oder als Set vorgesehen sein, die sich durch die Krümmung der Zahnbögen 3 und deren Breite B unterscheiden und aus denen der passende Prothesenbasisrohling 1 ausgewählt werden kann. Die Prothesenbasisrohlinge 1 können sich auch durch unterschiedliche Höhen H und Breiten B der Zahnbögen 3 unterscheiden, so wie durch unterschiedliche Weiten W und Längen L (siehe für die Länge Figur 3).

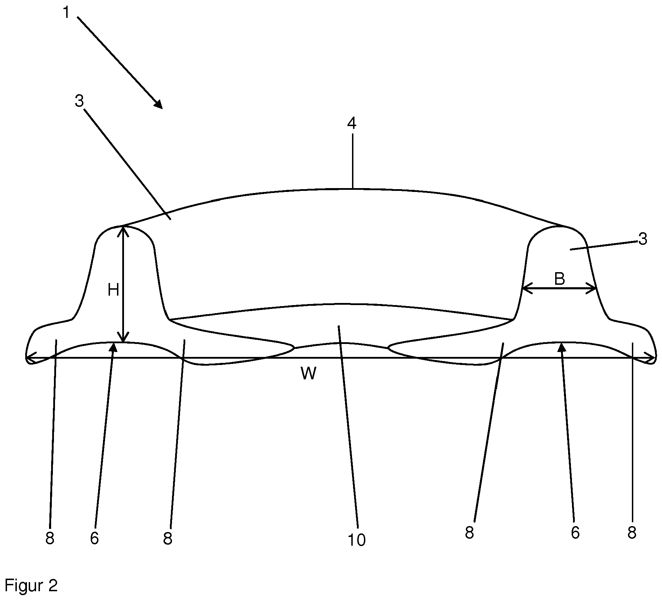

Figur 2 zeigt eine schematische seitliche Ansicht eines Prothesenbasisrohlings 1 zur Herstellung eines erfindungsgemäßen Fräskörpers. Der Prothesenbasisrohling 1 weist, analog dem nach Figur 1, einen Zahnbogen 3 auf, der im Vergleich zu dem nach Figur 1 jedoch eine etwas größere Breite B aufweist. Der Zahnbogen 3 erstreckt sich randseitig in Parabelform entlang des Prothesenbasisrohlings 1. Im Bereich des Scheitelpunkts 4 des Prothesenbasisrohlings 1 ist die Höhe H des Zahnbogens 3 vergrößert. Die Weite W des Prothesenbasisrohlings liegt zwischen 40 mm und 70 mm.

An der Unterseite des Prothesenbasisrohlings 1 ist eine Vertiefung 6 vorgesehen (in Figur 2 unten), die als Vorformung einer Auflagefläche des zahnlosen Kieferkamms des Patienten in der zu erzeugenden Prothesenbasis dient. Seitlich neben der Verdickung 3 durch den Zahnbogen 3 sind Verbreiterungen 8 beziehungsweise Überstände 8 vorgesehen, aus denen eine Verbindungsfläche zum Kiefersattel des Patienten geformt werden kann.

Das Mittelstück 10 reicht bei dieser Ausführungsform des Prothesenbasisrohlings 1 bis fast zur Mitte, so dass aus diesem Prothesenbasisrohling 1 auch eine großflächige Gaumenabdeckung geformt werden kann.

Figur 3 zeigt eine schematische Aufsicht auf einen nicht erfindungsgemäßen Fräskörper.

Der Fräskörper besteht aus einem Prothesenbasisrohling 1, der in ein Wachsbett 12 eingebettet ist.

Der Prothesenbasisrohling 1 weist eine randseitige parabelförmige Verdickung in Form eines Zahnbogens 3 auf, der sich analog der Ausführungen nach den Figuren 1 und 2 nach oben (in Figur 3 in Richtung des Betrachters) erstreckt. Zur besseren Kenntlichkeit des Aufbaus des Prothesenbasisrohlings 1 ist das Wachsbett 12 transparent dargestellt. Tatsächlich kann ein transluzentes Wachs für das Wachsbett 12 verwendet werden, damit der Prothesenbasisrohling 1 im Wachsbett 12 sichtbar ist. Im Bereich des Scheitelpunkts 4 des Zahnbogens 3 kann die Höhe des Zahnbogens 3 größer sein als an den gegenüberliegenden Seiten. Bei der Ausführung nach Figur 3 ist auch die Breite B im Bereich des Scheitelpunkts 4 erhöht. Der Prothesenbasisrohling 1 hat als äußere Abmessungen eine Weite W zwischen 40 mm und 70 mm und eine Länge L zwischen 40 mm und 70 mm.

Neben dem Zahnbogen 3 sind Überstände 8 vorgesehen, die dem gleichen Zweck dienen wie die Überstände 8 nach den Figuren 1 und 2. In der Mitte des Prothesenbasisrohlings 1 ist ein Mittelstück 10 vorgesehen, aus dem eine Gaumenplatte oder eine sublinguale Auflage der zu erzeugenden Prothesenbasis herstellbar ist. Im Bereich des Scheitelpunkts 4 des Prothesenbasisrohlings 1 ist der labiale Überstand 8 stark reduziert oder nicht mehr vorhanden. Auch der Querschnitt des Zahnbogens 3 senkrecht zur Parabelkurve beziehungsweise senkrecht zum Zahnbogen 3 verändert sich entlang des Zahnbogens 3. Die Steigung der labialen Flanke des Zahnbogens 3 ist im Bereich der Scheitelpunkts 4 reduziert.

Die Prothesenbasisrohlinge 1 nach den Figuren 1, 2 und 3 sind alle symmetrisch bezüglich der Sagittalebene aufgebaut, in der der Scheitelpunkt 4 liegt. Eventuell anatomisch notwendige Asymmetrien können beim Ausfräsen des Prothesenbasisrohlings 1 bei der Herstellung der Prothesenbasis erzeugt werden. Zur Herstellung einer Prothesenbasis wird ein Prothesenbasisrohling 1 aus einer Vielzahl von Prothesenbasisrohlingen 1 unterschiedlicher Abmessungen und Formen ausgewählt und in das Wachsbett 12 eingegossen. Alternativ kann auch ein Fräskörper aus einer Vielzahl von Fräskörpern mit unterschiedlichen Prothesenbasisrohlingen 1 unterschiedlicher Abmessungen und Formen ausgewählt werden.

Die äußeren Abmessungen der verschiedenen Prothesenbasisrohlinge 1 sind in beiden Fällen elektronisch in einer Datenbank gespeichert. Die Mundraumsituation des zu behandelnden Patienten wird mit Hilfe eines 3D-Scanners eingescannt und digitalisiert. Anhand von diesen und gegebenenfalls von weiteren Daten wird ein virtuelles Modell der zu erzeugenden Prothesenbasis mit Hilfe eines CAD-Verfahrens erzeugt.

Anschließend wird getestet, in welchen oder in welche der vorhandenen Prothesenbasisrohlinge 1 die zu erzeugende Prothesenbasis passen könnte. Es wird eine Liste der möglichen Prothesenbasisrohlinge 1 auf einem Bildschirm eines Computers angeboten. Die Reihenfolge kann sich nach der Volumendifferenz zwischen der zu erzeugenden Prothesenbasis und dem Prothesenbasisrohling 1 richten, wobei geringere Volumendifferenzen favorisiert werden. Ebenso kann auch der Prothesenbasisrohling 1 ausgewählt werden, der eine möglichst große nicht zu bearbeitende Fläche aufweist, die bis zum Ende des Fräsvorgangs mit dem Wachsbett 12 verbunden bleiben kann. Alternativ kann auch nur der Prothesenbasisrohling 1 mit der geringsten Volumendifferenz angezeigt werden oder nur die noch vorhandenen beziehungsweise eingelagerten Prothesenbasisrohlinge 1 berücksichtigt werden. Die geringe Volumendifferenz hat den Vorteil, dass bei diesen Prothesenbasisrohlingen 1 weniger Material abgetragen werden muss als bei Prothesenbasisrohlingen 1 mit einer höheren Volumendifferenz zu der zu erzeugenden Prothesenbasis. Die größte nicht zu bearbeitende Oberfläche des Prothesenbasisrohlings 1 hat den Vorteil, dass eine großflächige und damit stabile Verbindung mit dem umgebenden Wachsbett 12 verbleibt. Bevorzugt kann hierzu die Vertiefung 6 an der Unterseite des Prothesenbasisrohlings 1 mit Hilfe eines Abdrucks im Mundraum des Patienten erzeugt werden. Statt der Auswahl eines passenden Prothesenbasisrohlings 1 kann eine passende Form für einen Prothesenbasisrohling 1 ausgewählt werden und der Prothesenbasisrohling 1 wird anschließend mit einer Stopf-/Presstechnik selbst aus Kunststoff hergestellt. Die Form für die Auflagefläche 6 kann dabei mit Hilfe eines Abdrucks am Patienten erzeugt werden.

Anschließend wird ein Prothesenbasisrohling 1 oder eine Form für einen solchen Prothesenbasisrohling 1 durch den Anwender oder vom Computer ausgewählt, der Prothesenbasisrohling 1 gegebenenfalls hergestellt und, wenn er nicht bereits in ein Wachsbett 12 eingebettet ist, kann dies mit Hilfe eines Rings 2 geschehen. Der so erzeugte Fräskörper mit dem passenden Prothesenbasisrohling 1 wird in eine CAM-Vorrichtung, wie beispielsweise eine CAM-Vierachs-Fräse eingespannt. Dabei muss auf die richtige Orientierung des Prothesenbasisrohlings 1 in der CAM-Vorrichtung geachtet werden. Um die korrekte Position und Orientierung des Fräsköpers in der Halterung der CAM-Vorrichtung zu gewährleisten, ist am Zylindermantel des Fräskörpers seitlich zumindest eine Positionierhilfe 14 oder zumindest eine Halterung 14 angeordnet, mit der der Fräskörper an der CAM-Vorrichtung befestigt werden kann. Dazu muss die Position des Prothesenbasisrohlings 1 im Wachsbett 12 genau festgelegt sein. Zusätzlich müssen hierzu an den dem Fräskörper, insbesondere am Mantel des Wachsbetts 12 oder am Mantel des Rings 2 Markierungen oder Ausformungen 14 vorgesehen sein, die eine bestimmte Lage und Orientierung des Fräskörpers in der CAM-Vorrichtung ermöglichen oder bevorzugt erzwingen.

Anschließend wird auf der Basis des CAD-Modells der zu erzeugenden Prothesenbasis diese aus dem eingespannten und im Wachsbett 12 gehaltenen Prothesenbasisrohling 1 herausgefräst oder über ein anderes subtraktives CAM-Verfahren hergestellt. Dabei werden auch Teile des Wachsbetts 12 abgefräst. Da das Wachsbett 12 aber erheblich weicher als der Prothesenbasisrohling 1 ist, kann dies schneller geschehen und die Fräswerkzeuge werden dabei wesentlich weniger beansprucht.

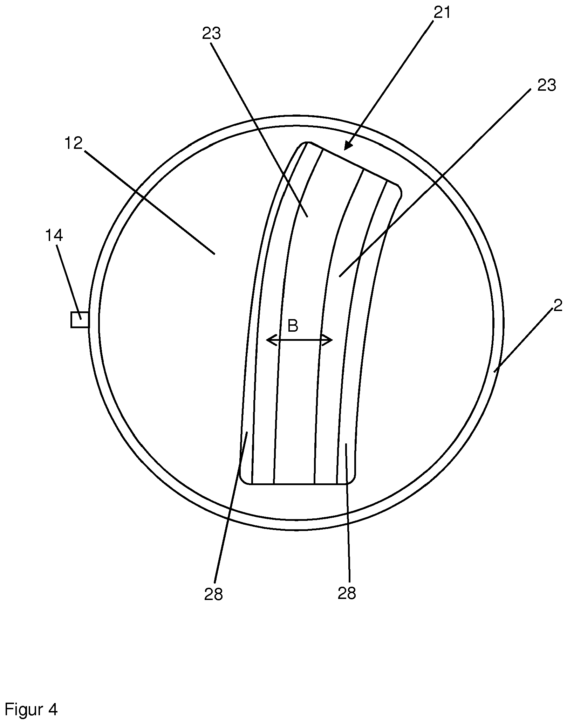

In diese Prothesenbasis können auch gleich Ausnehmungen zur Aufnahme von Prothesenzähnen erzeugt werden. Danach wird die zu erzeugte Prothesenbasis von dem verbleibenden Wachsbett 12 gelöst, in dem das Wachsbett 12 geschmolzen und/oder chemisch aufgelöst wird. Wachsrückstände an der Prothesenbasis können durch Polieren und/oder thermische und/oder chemische Reinigung entfernt werden. Anschließend werden Prothesenzähne in die Prothesenbasis eingeklebt und die Dental-Prothese ist fertiggestellt. Anschließend wird die Prothesenbasis poliert. Figur 4 zeigt eine schematische Aufsicht auf einen erfindungsgemäßen Fräskörper für eine Teilprothesenbasis. Der Fräskörper umfasst einen Prothesenbasisrohling 21, der in ein Wachsbett 12 eingebettet ist, wobei das Wachsbett 12 entlang des Umfangs von einem Ring 2 aus Kunststoff umschlossen ist. Der Prothesenbasisrohling 21 stellt im Prinzip einen Teilbereich des Prothesenbasisrohlings 1 nach Figur 3 dar. Um die korrekte Position und Orientierung des Fräsköpers in der Halterung der CAM-Vorrichtung zu gewährleisten, ist am Zylindermantel des Rings 2 außen zumindest eine Positionierhilfe 14 oder zumindest eine Halterung 14 angeordnet, mit der der Fräskörper an der CAM-Vorrichtung befestigt werden kann.

Ein Zahnbogenabschnitt 23 ist in Form eines Parabelabschnitts als Verdickung des Materials des Prothesenbasisrohlings 21 vorgesehen. Da die Breite B des Prothesenbasisrohlings 21 fast so breit ist, wie der gesamte Querschnitt des Prothesenbasisrohlings 21, ist der Zahnbogen 23 auch bei dieser Ausführungsform im Sinne der vorliegenden Erfindung randseitig angeordnet. Neben dem Zahnbogen 23 sind kurze Überstände 28 vorgesehen, die den gleichen Zweck erfüllen, wie die Überstände 8 der Ausführungsbeispiele nach den Figuren 1 und 2.

Auf der Unterseite des Prothesenbasisrohlings 21 ist eine Vertiefung vorgesehen (in der Aufsicht nach Figur 4 nicht zu sehen), die sich unterhalb des oberen Plateaus des Zahnbogens 23 in gleicher Richtung und Lage erstreckt und die mit Hilfe eines Abdrucks am Patienten geformt sein kann. Die Vertiefung dient als Vorformung der späteren Auflagefläche auf das Zahnfleisch einer aus dem Prothesenbasisrohling 21 erzeugten Prothesenbasis beziehungsweise der daraus erzeugten TeilDentalprothese und wird zur Verbindung mit dem Wachsbett 12 genutzt.

Das Herstellungsverfahren für den Prothesenbasisrohling 21 nach Figur 4 läuft analog dem zu den Figuren 1 bis 3 geschilderten Verfahren ab, wobei eben nur eine TeilDentalprothese erzeugt wird.

### Bezugszeichenliste

- 1,21: Prothesenbasisrohling
- 2: Ring / umlaufende Form
- 3: Vorgeformter Zahnbogen
- 4: Scheitelpunkt des Zahnbogens
- 6: Vertiefung an der Auflagefläche zum Zahnfleisch
- 8, 28: Überstand
- 10: Mittelstück
- 12: Wachsbett
- 14: Halterung / Positionierhilfe
- 23: Vorgeformter Zahnbogenabschnitt
- B: Breite des Zahnbogens
- H: Höhe des Zahnbogens
- L: Länge des Prothesenbasisrohlings
- W: Weite / Breite des Prothesenbaisrohlings

## Patentansprüche

1. Fräskörper aufweisend einen Prothesenbasisrohling (1, 21) zur Herstellung einer Prothesenbasis für eine Dentalprothese mit einem subtraktiven CAM-Verfahren, wobei der Prothesenbasisrohling (1, 21) vorgeformt ist und aus einem Kunststoff besteht, **dadurch gekennzeichnet, dass** der Prothesenbasisrohling (1, 21) in ein Wachsbett (12) eingebettet ist, so dass das Wachsbett (12) den Prothesenbasisrohling (1, 21) mechanisch hält und der Fräskörper eine umlaufende Form (2) aus Kunststoff umfasst, die den Fräsköper entlang eines Umfangs begrenzt, wobei das Wachsbett (12) zwischen dem Prothesenbasisrohling (1, 21) und der umlaufenden Form (2) angeordnet ist.

2. Fräskörper nach Anspruch 1, **dadurch gekennzeichnet, dass** die äußere Form des Fräskörpers eine Ronde bildet.

3. Fräskörper nach einem der vorangehenden Ansprüche, **dadurch gekennzeichnet, dass**
der Prothesenbasisrohling (1, 21) und die umlaufende Form (2) sich nicht berühren.

4. Fräskörper nach einem der vorangehenden Ansprüche, **dadurch gekennzeichnet, dass**
die Lage und Orientierung der zu erzeugenden Prothesenbasis in dem Prothesenbasisrohling (1, 21) durch die äußere Form des Prothesenbasisrohlings (1, 21) vorgegeben ist.

5. Fräskörper nach einem der vorangehenden Ansprüche, **dadurch gekennzeichnet, dass**
an wenigstens einer Seite des Fräskörpers, bevorzugt an einem Zylindermantel des als Ronde geformten Fräskörpers, eine Positionierhilfe (14) oder eine Halterung (14) zur Befestigung des Fräskörpers an einer CAM-Vorrichtung, insbesondere einer CAM-Fräsmaschine, angeordnet ist und/oder eine Markierung zur Positionierung des Fräskörpers vorgesehen ist.

6. Fräskörper nach einem der vorangehenden Ansprüche, **dadurch gekennzeichnet, dass**
der Prothesenbasisrohling aus Polymethylmethacrylat, mehrfach vernetzte Acrylaten, Polyetherketon, Polyetheretherketon, Polyamid, Polycarbonat oder Polyurethan besteht.

7. Fräskörper nach einem der vorangehenden Ansprüche, **dadurch gekennzeichnet, dass**
ein Zahnbogen (3) oder ein Zahnbogenabschnitt (23) als Materialverdickung des Prothesenbasisrohlings (1, 21) vorgeformt ist, wobei bevorzugt der Zahnbogen (3) als randseitige parabelförmige Verdickung (3) des Materials des Prothesenbasisrohlings (1, 21) ausgebildet ist oder der Zahnbogenabschnitt (23) als randseitige Verdickung (23) des Materials in der Form eines Teilstücks einer Parabelform des Prothesenbasisrohlings (1, 21) ausgebildet ist, wobei besonders bevorzugt
die Verdickung (3, 23) eine Breite (B) zwischen 8 mm und 30 mm aufweist und/oder die Verdickung (3, 23) eine Dicke (H) zwischen 5 mm und 30 mm aufweist.

8. Fräskörper nach einem der vorangehenden Ansprüche, **dadurch gekennzeichnet, dass**
der Prothesenbasisrohling (1, 21) eine Weite (W) zwischen 40 mm und 70 mm und eine Länge (L) zwischen 40 mm und 70 mm aufweist.

9. Fräskörper nach einem der vorangehenden Ansprüche, **dadurch gekennzeichnet, dass**
eine Fläche (6) des Prothesenbasisrohlings (1, 21), die zur Auflage auf dem Zahnfleisch des Patienten vorgesehen ist, durch einen Abdruck am Patienten geformt ist.

10. Verfahren zur Herstellung einer Prothesenbasis zur Herstellung einer Totaldentalprothese oder wenigstens einer Teildentalprothese mit einem Fräskörper nach einem der vorangehenden Ansprüche aufweisend die folgenden Verfahrensschritte:
1) Befestigen des Fräskörpers in einer CAM-Vorrichtung zum Abtragen von Material des Prothesenbasisrohlings (1, 21) mit einem CAM-Verfahren und
2) Abtragen von Material des Prothesenbasisrohlings (1, 21) und von Wachs des Wachsbetts (12) mit der CAM-Vorrichtung auf der Basis eines berechneten CAD-Modells.

11. Verfahren nach Anspruch 10, **dadurch gekennzeichnet, dass** vor dem Befestigen des Fräskörpers in der CAM-Vorrichtung der Fräskörper durch Einbetten des Prothesenbasisrohlings (1, 21) in ein Wachsbett (12) hergestellt wird.

12. Verfahren nach Anspruch 10 oder 11, **dadurch gekennzeichnet, dass** der Fräskörper aus einer Vielzahl von Fräskörpern mit unterschiedlichen Prothesenbasisrohlingen (1, 21) ausgewählt wird, wobei die Auswahl rechnerisch auf der Grundlage des CAD-Modells der zu erzeugenden Prothesenbasis und den bekannten Abmessungen aller in den Fräskörpern enthaltenen Prothesenbasisrohlinge (1, 21) erfolgt, wobei bevorzugt über eine Ausgabeeinrichtung eines Computers die Prothesenbasisrohlinge (1, 21) der Auswahl vorgeschlagen werden und/oder über eine Eingabeeinrichtung ausgewählt werden können, welche die Form des CAD-Modells der zu erzeugenden Prothesenbasis vollständig aufnehmen können, wobei vorzugsweise die vorgeschlagene Reihenfolge der in der Auswahl vorgeschlagenen Fräskörper bestimmt wird durch eine zunehmende Volumendifferenz zwischen der Form der Prothesenbasisrohlinge (1, 21) und der Form des CAD-Modells der zu erzeugenden Prothesenbasis.

13. Verfahren nach einem der Ansprüche 12 bis 15, **dadurch gekennzeichnet, dass** mit dem CAM-Verfahren in einem vorgeformten Zahnbogen (3, 23) des Prothesenbasisrohlings (1, 21) mehrere Ausnehmungen zur Aufnahme von Prothesenzähnen in der hergestellten Prothesenbasis erzeugt werden, und/oder
der Prothesenbasisrohling (1, 21) aus einem Heißpolymerisat in einer Metallform mittels Stopf-/Press- oder Injektions-Technik oder aus einem Kaltpolymerisat in einer Metall-, Silikon- oder Dubliergelform mittels Gieß- oder Injektionstechnik hergestellt wird.

14. Set aufweisend wenigstens einen Fräskörper nach einem der Ansprüche 1 bis 9, vorzugsweise eine Mehrzahl von Fräskörpern nach einem der Ansprüche 1 bis 9 mit unterschiedlich geformten Prothesenbasisrohlingen (1, 21), und Daten zur äußeren Form des zumindest einen Prothesenbasisrohlings (1, 21) und bevorzugt der Lage des Prothesenbasisrohlings (1, 21) im Wachsbett (12), besonders, bevorzugt aufweisend einen Datenträger auf dem die Daten gespeichert sind.

15. Set nach Anspruch 14, **dadurch gekennzeichnet, dass**
das Set mehrere Fräskörper mit unterschiedlich geformten Prothesenbasisrohlingen (1, 21) aufweist und Daten zur äußeren Form aller dieser Prothesenbasisrohlinge (1, 21) aufweist und dass das Set zur Umsetzung eines Verfahrens nach einem der Ansprüche 10 bis 13 vorgesehen ist.

## Claims

1. Milling body comprising a prosthesis base blank (1, 21) for producing a prosthesis base for a dental prosthesis with a subtractive CAM method, wherein the prosthesis base blank (1, 21) is preformed and consists of a plastic material, **characterised in that**
the prosthesis base blank (1, 21) is embedded in a wax bed (12) so that the wax bed (12) mechanically holds the prosthesis base blank (1, 21) and the milling body comprises a circumferential mould (2) made of plastic material which delimits the milling body along a circumference, the wax bed (12) being arranged between the prosthesis base blank (1, 21) and the circumferential mould (2).

2. Milling body according to claim 1, **characterized in that**
the outer shape of the milling body forms a circular blank.

3. Milling body according to any one of the preceding claims, **characterized in that** the prosthesis base blank (1, 21) and the circumferential mould (2) do not touch each other.

4. Milling body according to any one of the preceding claims, **characterized in that** the position and orientation of the prosthesis base to be produced in the prosthesis base blank (1, 21) is predetermined by the outer shape of the prosthesis base blank (1, 21).

5. Milling body according to any one of the preceding claims, **characterized in that** on at least one side of the milling body, preferably on a cylinder jacket of the milling body formed as a circular blank, a positioning aid (14) or a holder (14) for fastening the milling body to a CAM device, in particular a CAM milling machine, is arranged and/or a marking for positioning the milling body is provided.

6. Milling body according to any one of the preceding claims, **characterized in that** the prosthesis base blank consists of polymethyl methacrylate, multiple crosslinked acrylates, polyether ketone, polyether ether ketone, polyamide, polycarbonate or polyurethane.

7. Milling body according to any one of the preceding claims, **characterized in that** a dental arch (3) or a dental arch section (23) is preformed as a material thickening of the prosthesis base blank (1, 21), preferably the dental arch (3) is designed as a parabolic thickening (3) at an edge of the material of the prosthesis base blank (1, 21), or the dental arch section (23) is designed as a thickening (23) at the edge of the material in the form of a section of a parabolic shape of the prosthesis base blank (1, 21), wherein particularly preferably
the thickening (3, 23) has a width (B) between 8 mm and 30 mm and/or the thickening (3, 23) has a thickness (H) between 5 mm and 30 mm.

8. Milling body according to any one of the preceding claims, **characterized in that** the prosthesis base blank (1, 21) has a width (W) of between 40 mm and 70 mm and a length (L) of between 40 mm and 70 mm.

9. Milling body according to any one of the preceding claims, **characterized in that** a surface (6) of the prosthesis base blank (1, 21), which is intended to rest on the patient's gums, is formed by an impression on the patient.

10. Method for the production of a prosthesis base for the production of a total dental prosthesis or at least one partial dental prosthesis with a milling body according to any one of the preceding claims comprising the following method steps:
1) fixing the milling body in a CAM device for removing material of the prosthesis base blank (1,21) with a CAM method and
2) Removal of material of the prosthesis base blank (1, 21) and of wax of the wax bed (12) with the CAM device on the basis of a calculated CAD model.

11. Method according to claim 10, **characterized in that**
before fixing the milling body in the CAM device, the milling body is produced by embedding the prosthesis base blank (1, 21) in a wax bed (12).

12. Method according to claim 10 or 11, **characterized in**
selecting the milling body from a plurality of milling bodies with different prosthesis base blanks (1, 21), the selection being made by calculation on the basis of the CAD model of the prosthesis base to be produced and the known dimensions of all the prosthesis base blanks (1, 21) contained in the milling bodies, preferably suggesting and/or selecting the prosthesis base blanks (1, 21) via an input device which can completely take up the shape of the CAD model of the prosthesis base to be produced, preferably the suggested sequence of the milling bodies suggested in the selection being determined by an increasing volume difference between the shape of the prosthesis base blanks (1, 21) and the shape of the CAD model of the prosthesis base to be produced.

13. Method according to one of claims 12 to 15, **characterized in that**
a plurality of recesses are produced by the CAM process in a preformed dental arch (3, 23) of the prosthesis base blank (1, 21) for receiving denture teeth in the produced prosthesis base, and/or
the prosthesis base blank (1, 21) is produced from a hot polymer in a metal mould by means of a plug/press or injection technique or from a cold polymer in a metal, silicone or duplicating gel mould by means of a casting or injection technique.

14. Set comprising at least one milling body according to any one of claims 1 to 9, preferably a plurality of milling bodies according to any one of claims 1 to 9 with differently shaped prosthesis base blanks (1, 21), and data on the outer shape of the at least one prosthesis base blank (1, 21) and preferably the position of the prosthesis base blank (1, 21) in the wax bed (12), particularly preferably comprising a data carrier on which the data are stored.

15. Set according to claim 14, **characterized in that**
the set comprises a plurality of milling bodies with differently shaped prosthesis base blanks (1, 21) and has data on the external shape of all these prosthesis base blanks (1, 21), and **in that** the set is provided for implementing a method according to any one of claims 10 to 13.

## Revendications

1. Corps de fraisage présentant une ébauche de base de prothèse (1, 21) pour la fabrication d'une base de prothèse destinée à une prothèse dentaire avec un procédé de FAQ soustractif, où l'ébauche de base de prothèse (1, 21) est préformée et est constituée d'une matière plastique, **caractérisé en ce que**
l'ébauche de base de prothèse (1, 21) est incorporée dans un lit de cire (12) de sorte que le lit de cire (12) maintienne mécaniquement l'ébauche de base de prothèse (1, 21), et le corps de frisage comprend un moule périphérique (2) à base de matière plastique qui délimite le corps de fraisage le long de son périmètre, où le lit de cire (12) est disposé entre l'ébauche de base de prothèse (1, 21) et le moule périphérique (2).

2. Corps de fraisage selon la revendication 1, **caractérisé en ce que** la forme extérieure du corps de fraisage forme un rond.

3. Corps de fraisage selon l'une des revendications précédentes, **caractérisé en ce que** l'ébauche de base de prothèse (1, 21) et le moule périphérique (2) ne se touchent pas.

4. Corps de fraisage selon l'une des revendications précédentes, **caractérisé en ce que** la position et l'orientation de la base de prothèse à produire dans l'ébauche de base de prothèse (1, 21) est prédéterminée par la forme extérieure de l'ébauche de base de prothèse (1, 21).

5. Corps de fraisage selon l'une des revendications précédentes, **caractérisé en ce qu'**une aide au positionnement (14) ou un support (14) pour la fixation du corps de fraisage sur un dispositif FAQ, notamment une fraise FAQ, sont disposés sur au moins un côté du corps de fraisage, de préférence sur une enveloppe cylindrique du corps de fraisage conçu sous forme d'un rond, et/ou un marquage est prévu pour le positionnement du corps de fraisage.

6. Corps de fraisage selon l'une des revendications précédentes, **caractérisé en ce que** l'ébauche de base de prothèse est constituée de polyméthyl méthacrylate, d'acrylates plusieurs fois réticulés, de polyéther cétone, de polyéther éther cétone, de polyamide, de polycarbonate ou de polyuréthane.

7. Corps de fraisage selon l'une des revendications précédentes, **caractérisé en ce qu'**un arc dentaire (3) ou un segment d'arc dentaire (23) est préformé pour servir d'épaississant de matériau de l'ébauche de base de prothèse (1, 21), où, de préférence, l'arc dentaire (3) est conçu sous forme d'un épaississement (3) latéral de forme parabolique de l'ébauche de base de prothèse (1, 21) ou le segment d'arc dentaire (23) est conçu sous forme d'un épaississement (23) latéral du matériau dans la forme d'une pièce partielle d'une forme parabolique de l'ébauche de base de prothèse (1, 21), dans lequel, de manière particulièrement préférée, l'épaississement (3, 23) présente une largeur (B) entre 8 mm et 30 mm et/ou l'épaississement (3, 23) présente une épaisseur (H) entre 5 mm et 30 mm.

8. Corps de fraisage selon l'une des revendications précédentes, **caractérisé en ce que** l'ébauche de base de prothèse (1, 21) présente une largeur (W) entre 40 mm et 70 mm et une longueur (L) entre 40 mm et 70 mm.

9. Corps de fraisage selon l'une des revendications précédentes, **caractérisé en ce qu'**une surface (6) de l'ébauche de base de prothèse (1, 21), qui est prévue pour le dépôt sur les gencives du patient, est formée par une empreinte sur le patient.

10. Procédé de fabrication d'une base de prothèse pour la production d'une prothèse dentaire totale ou d'au moins une prothèse dentaire partielle avec un corps de fraisage selon l'une des revendications précédentes présentant les étapes de procédé suivantes :
1) la fixation du corps de fraisage dans un dispositif FAQ pour l'enlèvement de matière de l'ébauche de base de prothèse (1, 21) avec un procédé FAQ, et
2) l'enlèvement de matière de l'ébauche de base de prothèse (1, 21) et de cire du lit de cire (12) avec le dispositif FAQ sur la base d'un modèle de CAO calculé.

11. Procédé selon la revendication 10, **caractérisé en ce que**
le corps de fraisage est fabriqué avant la fixation du corps de fraisage dans le dispositif FAQ par l'incorporation de l'ébauche de base de prothèse (1, 21) dans un lit de cire (12).

12. Procédé selon la revendication 10 ou la revendication 11, **caractérisé en ce que** le corps de fraisage est choisi parmi un grand nombre de corps de fraisage avec des ébauches de bases de prothèse (1, 21) différentes, où la sélection a lieu par calcul sur la base du modèle de CAO de la base de prothèse à fabriquer et des dimensions connues de toutes les ébauches de base de prothèses (1, 21) contenues dans les corps de fraisage, où, de préférence, les ébauches de bases de prothèses (1, 21) de la sélection sont prévues par le biais d'un dispositif de délivrance d'un ordinateur et/ou peuvent être sélectionnés par le biais d'un diapositif d'entrée, lesquels peuvent totalement adopter la base de prothèse à fabriquer , où de préférence, l'ordre proposé des corps de fraisage proposés dans la sélection est déterminé par une différence de volume croissante entre la forme des ébauches de bases de prothèses (1, 21) et la forme du modèle de CAO de la base de prothèse à fabriquer.

13. Procédé selon l'une des revendications 12 à 15,**caractérisé en ce qu'**avec le procédé FAQ plusieurs évidements pour la réception de dents prothétiques sont créés dans un arc dentaire (3, 23) préformé de l'ébauche de base de prothèse (1, 21) dans la base de prothèse fabriquée,
et/ou
l'ébauche de base de prothèse (1, 21) est fabriquée à partir d'un produit de polymérisation à chaud dans un moule métallique au moyen d'une technique de remplissage / pressage ou d'une technique d'injection ou à partir d'un produit de polymérisation à froid dans un moule métallique, en silice ou en gel de duplication au moyen d'une technique de coulée ou une technique d'injection.

14. Ensemble présentant au moins un corps de fraisage selon l'une des revendications 1 à 9, de préférence une multiplicité de corps de fraisage selon l'une des revendications 1 à 9 avec des ébauches de bases de prothèses (1, 21) formées différemment, et des données pour la forme extérieure de l'au moins une ébauche de base de prothèse (1, 21) et de préférence la position de l'ébauche de base de prothèse (1, 21) dans le lit de cire (12), de manière particulièrement préférée présentant un support de données sur lequel les données sont stockées.

15. Ensemble selon la revendication 14, **caractérisé en ce que**
l'ensemble présente plusieurs corps de fraisage avec des ébauches de bases de prothèses (1, 21) formées de manière différente et des données pour la forme extérieure de toutes ces ébauches de bases de prothèses (1, 21) et que l'ensemble est prévu pour l'application d'un procédé selon l'une des revendications 10 à 13.
